# EUROPÄISCHE PATENTSCHRIFT

(11) **EP 1 513 244 B1**
(45) Veröffentlichungstag und Bekanntmachung des Hinweises auf die Patenterteilung: **03.06.2009**
(21) Anmeldenummer: 03019990.5
(22) Anmeldetag: 03.09.2003
(51) Int. Cl.: H02K 5/173

(54) **Aussenläufermotor**
Outer rotor motor
Moteur à rotor extérieur

(43) Veröffentlichungstag der Anmeldung: 09.03.2005
(73) Patentinhaber: Ziehl-Abegg AG, 74653 Künzelsau (DE)
(72) Erfinder: Kress, Volker, 74635 Kupferzell (DE); Mauthe, Ralf, 74348 Lauffen (DE)
(74) Vertreter: Jacoby, Georg

(56) Entgegenhaltungen:
- US-A- 4 634 908
- US-B1- 6 225 722
- PATENT ABSTRACTS OF JAPAN vol. 2002, no. 02, 2. April 2002 (2002-04-02) & JP 2001 298893 A (CANON INC;CANON PRECISION INC), 26. Oktober 2001 (2001-10-26)

## Beschreibung

### GEBIET DER ERFINDUNG

Die vorliegende Erfindung bezieht sich auf Elektromotoren mit außenliegendem Läufer.

### HINTERGRUND DER ERFINDUNG

In bestimmten Einsatzgebieten von Elektromotoren, wie beispielsweise Ventilatoren für Kühlaggregate von Klimaanlagen, werden kurze Motorbauformen bevorzugt. Solche kurzen Bauformen sind beispielsweise mit Außenläufermotoren zu erreichen. Bei diesem Motorentyp können die Ventilatorflügel direkt auf den außenliegenden Läufer montiert werden.

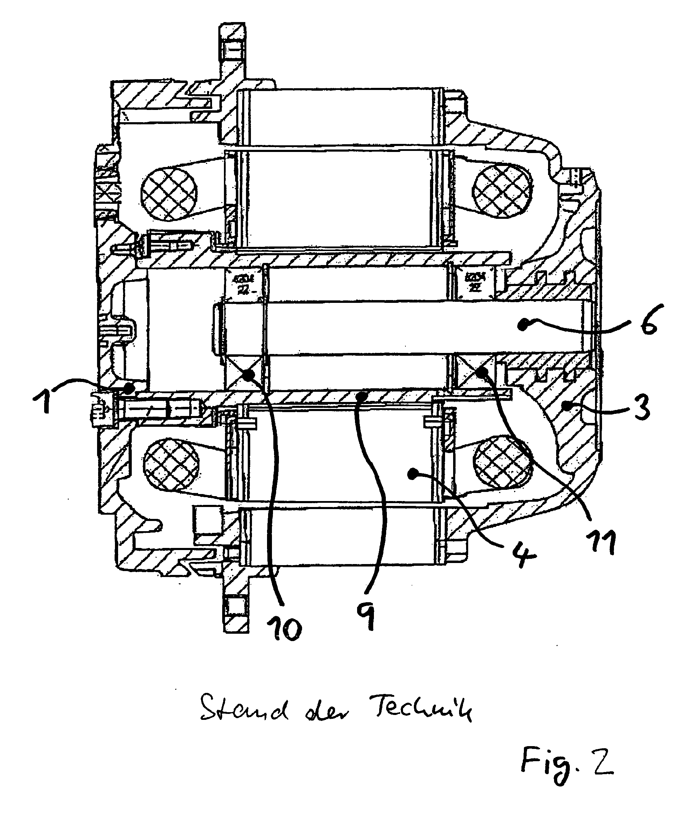

Ein bei der Firma Ziehl-Abegg gefertigter Motor ist in Figur 2 dargestellt. Der Motor weist einen Ständer 1 auf, der eine Stirnseite des Motors verschließt und über den der Motor befestigt wird. Der Läufer 3 des Motors ist als Topf ausgebildet und bildet zusammen mit dem Ständer 1 das Motorgehäuse. Der Läufer 3 weist eine zentrale Welle 6 auf, die über Wälzlager 10,11 gelagert ist. Zur Lagerung der Welle 6 ist am Ständer 1 eine Ständerbuchse 9 befestigt, die die Lagersitze trägt. Diese Buchse 9 ist insbesondere aus Aluminium gefertigt. Da Aluminium eine etwa doppelt so hohe Wärmeausdehnung wie der Stahl der Wälzlager 10,11 besitzt, sind besonders belastete Motoren mit teuren Buchsen 9 ausgestattet, die entweder aus Grauguß bestehen oder eine zum Beispiel eingegossene Stahlbuchse aufweisen. An der Buchse 9 ist außenseitig ein Ständerblechpaket 4 aufgeklebt. Die Buchse 9 erstreckt sich über die gesamte Länge des Ständerblechpakets 4.

Aus der DE 87 11 050 U ist ein Innenläufermotor bekannt, bei dem am Läuferblechpaket ein Teil befestigt ist, das den Ständer umgreift. Der Motor weist einen Flansch mit einem angesetzten zylindrischen Abschnitt auf, an dem das Ständerblechpaket befestigt ist. Der Läufer ist auf einer ortsfesten Achse gelagert, wobei die Lager läuferseitig entweder durch ein Distanzrohr zwischen den Lagern, oder durch eine am Läuferblechpaket befestigte Buchse mit Nuten und Sicherungsringen auf dem vorgegebenen Abstand gehalten werden. Die Lager sind dabei im Läuferblechpaket beziehungsweise in der Buchse gelagert.

Aus der JP 2001298893 A ist ein Außenläufermotor bekannt, bei dem ein Läuferlager direkt im Ständerblechpaket gelagert ist.

Die US 4,634,908 A beschreibt einen Außenläufermotor, bei dem die Läuferlager in einer durch das Ständerblechpaket geführten Lagerbuchse angeordnet sind.

Die JP 07222390 A betrifft einen Außenläufermotor mit den Merkmalen des Oberbegriffs des Anspruchs 1, bei dem an einem Ständer ein Lager befestigt ist. Über dieses und ein weiteres Lager ist ein Ständerblechpaket angeordnet. Bei einer anderen Ausführungsform gemäß Fig. 2 ist zur axialen Positionsfestlegung ein Abstandsring vorgesehen.

Die US 5,068,556 A betrifft einen Innenläufermotor, bei dem beide Lager in Axialrichtung außerhalb des Läuferblechpakets angeordnet sind. Der Läufer wird durch topfartige Körper gebildet, die mit einem flanschartigen Rand außen am Läuferblechpaket befestigt sind und wellenseitig die Lager des Läufers aufnehmen. Das Läuferblechpaket weist im Bereich des Flanschansatzes eine Stufe auf.

### ZUSAMMENFASSUNG DER ERFINDUNG

Ein Außenläufermotor umfaßt einen Ständer, einen Läufer, ein Ständerblechpaket, das in axialer Richtung eine zentrale Aussparung aufweist, eine in dieser Aussparung angeordnete Welle, die mit dem Läufer fest verbunden ist und zwei Lager zur Lagerung der Welle. Beide Lager sind direkt im Ständerblechpaket gelagert. Das Ständerblechpaket ist am Ständer befestigt. Die axiale Position der Lager ist in wenigstens einer Richtung durch Stufen ein Ständerblechpaket festgelegt.

Weitere Merkmale sind in den offenbarten Erzeugnissen implizit enthalten oder werden für den Fachmann aufgrund der folgenden detaillierten Beschreibung von Ausführungsformen und der angefügten Zeichnung ersichtlich.

### BESCHREIBUNG DER ZEICHNUNG

Ausführungsformen der Erfindung werden nun beispielhaft und unter Bezugnahme auf die angefügte Zeichnung beschrieben, in der:
Fig. 1 einen Längsschnitt einer Ausführungsform eines Außenläufermotors gemäß der vorliegenden Erfindung darstellt;
Fig. 2 einen Längsschnitt eines Außenläufermotors gemäß dem bisherigen Stand der Technik darstellt.

### BESCHREIBUNG VON AUSFÜHRUNGSFORMEN

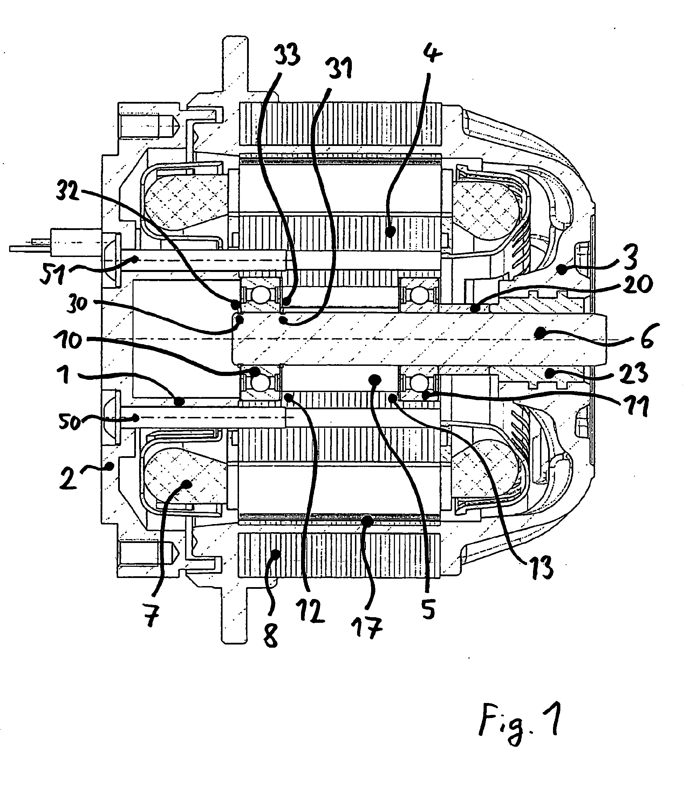

Fig. 1 zeigt einen Längsschnitt einer Ausführungsform eines Außenläufermotors gemäß der vorliegenden Erfindung. Vor der detaillierten Beschreibung der Fig. 1 folgen jedoch zunächst verschiedene Erläuterungen zu den Ausführungsformen.

Die Motoren der Ausführungsformen umfassen einen Ständer, einen Läufer, Läufer- und Ständerblechpakete und eine zum Läufer gehörende Welle, über die der Läufer gelagert ist. Ein Flansch ist mit dem Ständer fest verbunden oder mit diesem einteilig ausgebildet. Über den Flansch erfolgt die Befestigung des Motors. Er verschließt auch eine Stirnseite des Motors. Der Läufer ist als Topf ausgebildet, der den Ständer umgreift. Er bildet zusammen mit dem Flansch das Motorgehäuse. Am zylindrischen Teil des Topfes sind innenseitig die Läuferblechpakete befestigt. Die Welle ist zentral im Läufer angeordnet. Die Lagerung der Welle geschieht insbesondere über Wälzlager und hierbei insbesondere über Kugellager. Nachfolgend wird die Art und Weise, in der die Lagerung der Welle in den Ausführungsformen erfolgt, näher beschrieben, unter anderem auch im Vergleich zu verschiedenen Motortypen aus dem oben genannten Stand der Technik.

Bei normalen Innenläufermotoren ist die Welle beidseitig außerhalb der Ständer- und Läuferpakete im Motorgehäuse gelagert. Das Motorgehäuse umschließt dabei die Ständer- und Läuferpakete. Es dient auch als Ständer, d.h. das Ständerblechpaket ist am Motorgehäuse befestigt.

Sowohl bei Außenläufermotoren, die dem oben genannten Stand der Technik entsprechen, als auch bei solchen, die den Ausführungsformen entsprechen, liegen dagegen andere Verhältnisse vor. Das Motorgehäuse besteht teilweise aus dem festen Ständer und teilweise aus dem äußeren Topf des Läufers. Das Läuferblechpaket wird nicht vom Ständer umschlossen.

Zur Lagerung der Welle und zur Befestigung des Ständerblechpakets weisen daher die im Stand der Technik genannten Außenläufermotoren eine Ständerbuchse auf, die am Ständer befestigt ist. Die Ständerbuchse nimmt die von der Welle ausgeübten Kräfte auf und leitet sie an den Ständer beziehungsweise den Flansch weiter, sie übernimmt in dieser Hinsicht die Funktion des Motorgehäuses bei den oben genannten Innenläufermotoren beziehungsweise die Funktion des angesetzten zylindrischen Abschnitts der eingangs als Stand der Technik genannten Druckschrift DE 87 11 050 U. Für Motoren verschiedener Länge werden jeweils verschiedene Ständerbuchsen eingesetzt. Die Ständerbuchsen sind insbesondere aus Aluminium gefertigt. Für besonders hoch belastete Motoren werden jedoch teure Buchsen aus Grauguß oder Buchsen mit Stahlrohreinsätzen verwendet.

Es wurde erkannt, daß im Stand der Technik die Fertigung der Ständerbuchse relativ aufwendig ist. Ständerbuchsen aus Aluminium werden im Bereich der Lagersitze und dem Sitz des Ständerblechpakets bearbeitet. Die an Graugußbuchsen durchzuführenden Arbeiten sind im allgemeinen noch aufwendiger. Im Gegensatz zu Ständerbuchsen aus Aluminium können Graugußbuchsen nicht einteilig mit dem Ständer und Flansch hergestellt werden. Dadurch sind weitere Arbeiten zur Befestigung der Ständerbuchse notwendig. Sowohl Ständerbuchsen aus Aluminium, als auch solche aus Grauguß werden der Motorlänge angepaßt.

Die Ausführungsformen weisen im Gegensatz zum genannten Stand der Technik keine Ständerbuchse auf, so daß die damit verbundenen Arbeitsgänge entfallen. Die Wälzlager sitzen direkt im Ständerblechpaket.

Der Ständer muß nicht speziell bearbeitet werden und kann für Motoren gleichen Durchmessers für alle Motorlängen standardisiert werden.

Die Wärmeausdehnung von Aluminium ist etwa doppelt so hoch wie beim Stahl der Wälzlager. Bei hochbelasteten Außenläufermotoren des genannten Stands der Technik werden daher aufgrund der unterschiedlichen radialen Ausdehnung von Lager und Ständerbuchse in der Regel zusätzliche Maßnahmen getroffen. Insbesondere werden Ständerbuchsen aus Grauguß eingesetzt oder Stahlrohre in die Ständerbuchse eingegossen. Dagegen weist in den Ausführungsformen das Ständerblechpaket in der Regel eine höhere Festigkeit als die im Stand der Technik genannten Ständerbuchsen aus Aluminium auf. Außerdem besitzen das Ständerblechpaket und die Wälzlager oftmals in etwa denselben Wärmeausdehnungskoeffizienten. Beim Lagersitz im Ständerblechpaket kann daher auf zusätzliche Maßnahmen verzichtet werden.

In einem massiven Leiter treten unter der Einwirkung des von der Wicklung erzeugten Wechselfeldes Wirbelströme auf, die hohe Energieverluste verursachen. Blechpakete bestehen daher zur Vermeidung von Wirbelströmen aus voneinander isolierten Blechen. Bei den im Stand der Technik genannten Außenläufermotoren können allerdings zwischen den Blechen Kurzschlüsse auftreten. Durch Kurzschlüsse treten Wirbelströmen auf, die sich über mehrere Bleche erstrecken. Dies ist zum Beispiel der Fall, wenn das Ständerblechpaket mit einem Preßsitz auf der elektrisch leitenden Ständerbuchse sitzt. Im Vergleich hierzu ist die Situation in den erfindungsgemäßen Ausführungsformen mit im Blechpaket sitzenden Lagern günstiger, da Kurzschlüsse nur im Bereich der Lager auftreten. Auch beim Einsatz einer Stanzpaketierung zur Fertigung des Ständerblechpakets können sowohl im Stand der Technik, wie auch in den beschriebenen Ausführungsformen Kurzschlüsse auftreten.

Die Kurzschlüsse treten jedoch in allen genannten Fällen nur am radialen Rand der Bleche auf. Es können sich daher über mehrere Bleche nur Wirbelströme mit langen, über den Rand der Bleche verlaufenden Stromwegen ausbilden. Die hierdurch auftretenden Verluste können toleriert werden. Auch Kurzschlüsse zwischen verschiedenen Lagern über die in der Regel leitende Welle sind aufgrund der sehr langen Stromwege weniger störend.

Da in den Ausführungsformen das Ständerblechpaket als tragendes Element eingesetzt wird, ist ein Merkmal die Befestigung des Ständerblechpakets am Ständer. Die durch die Lagerung des Läufers auftretenden Kräfte werden über das Ständerblechpaket übertragen. In einigen Ausführungsformen ist die Stirnseite des Blechpakets am Flansch beziehungsweise am Ständer befestigt. In einigen Ausführungsformen ist das Ständerblechpaket mittels Schrauben am Flansch beziehungsweise Ständer befestigt. Hierzu werden geeignete Bohrungen am Flansch und entsprechend angeordnete Bohrungen im Ständerblechpaket angebracht. Die Bohrungen verlaufen in axialer Richtung über das ganze Ständerblechpaket oder nur einen Abschnitt des Ständerblechpakets. In anderen Ausführungsformen erfolgt die Befestigung über eine Klebeverbindung.

Das Blechpaket besteht aus einzelnen Blechen. Die notwendige Festigkeit für die Lagersitze und die Übertragung der über die Welle ausgeübten Kräfte an den Ständer wird durch die Harzverklebung der Bleche und die Ständerwicklung erreicht. Die auftretenden Kräfte werden dabei durch die Gesamtmasse des Außenläufers, d.h. die Masse der Welle, des Läufertopfes, des Läuferblechpakets mit Wicklungen und der an ihm befestigten Teile, wie zum Beispiel Ventilatorflügel, hervorgerufen. Zu den statischen Kräften kommen im Betrieb die durch die Rotation verursachten dynamischen Kräfte und die von außen, zum Beispiel am Ventilatorflügel, angreifenden Kräfte.

Zur Lagerung der Welle ist deren axiale Position gegenüber dem Ständerblechpaket durch geeignete Mittel festzulegen. Dies geschieht durch verschiedene Mittel zur wellenseitigen und ständerseitigen axialen Fixierung der einzelnen Lager und deren Zusammenwirken. Nachfolgend wird insbesondere die Fixierung in axialer Richtung näher beschrieben. Es ist dabei zwischen der Fixierung der Lager auf der Welle, der wellenseitigen Fixierung, und der Fixierung der Lager auf der Seite des Ständerblechpakets, der ständerseitigen Fixierung, zu unterscheiden. Zur leichteren Beschreibung wird nachfolgend das dem Ständer zugewandte Ende der Welle als "innen" und das entgegengesetzte Ende der Welle als "außen" bezeichnet, was jedoch nicht einschränkend zu verstehen ist. Der Begriff "ständerseitig" bezieht sich dagegen auf die im Ständerblechpaket sitzende ständerfeste Seite der Lager.

Die ständerseitige axiale Position eines Lagers ist durch eine Stufe im Ständerblechpaket festgelegt. Diese verhindert eine Verschiebung des Lagers und damit der Welle in Richtung der Stufe. Insbesondere weist in einigen Ausführungsformen das Ständerblechpaket an der Position des inneren Lagers eine Stufe auf, die eine Verschiebung nach außen verhindert, während es am äußeren Lager eine Stufe in entgegengesetzter Richtung aufweist.

Die Bleche des Blechpakets können über Nieten zusammengehalten sein. Für die Herstellung eines Ständerblechpakets mit Stufe wird jedoch insbesondere eine Stanzpaketierung des Blechpakets eingesetzt. Bei diesem Herstellungsvorgang können die Bleche auf verschiedenen axialen Positionen des Blechpakets relativ einfach verschiedene Querschnitte aufweisen. Eine Stufe wird daher bereits beim Aufbau des Blechpakets eingearbeitet. Im Falle eines vernieteten Blechpakets ist das Einarbeiten beim Aufbau oder auch das nachträgliche Einarbeiten der Stufe oftmals sehr aufwendig und nicht rentabel.

Die geforderte Fertigungstoleranz bei der Herstellung des Ständerblechpakets mit Stufe hängt von der Art der Lagersitze ab. Weisen die Lager im Ständerblechpaket einen Schiebe- oder Preßsitz auf, sind die Lagersitze in radialer Richtung genau zu fertigen. Klebeverbindungen können dagegen etwas größere Fertigungstoleranzen ausgleichen. Die axiale Fertigungsgenauigkeit der Stanzpaketierung ist relativ gering, da das Blechpaket nach dem Stanzen nachfedert. Die Lager können jedoch axial über Federn verspannt werden. Abhängig von der Befestigungsart der Lager im Ständerblechpaket erfolgt eine Nachbearbeitung der Lagersitze durch Drehen oder Fräsen oder es kann auf eine spanende Nachbearbeitung des Ständerblechpakets verzichtet werden.

Zur Festlegung der wellenseitigen axialen Position des äußeren Lagers weisen einige Ausführungsformen eine gegen den Läufer abgestützte oder mit diesem fest verbundene Abstandsbuchse auf. Diese verhindert eine Verschiebung des Lagers auf der Welle in Richtung des Bodens des Läufertopfes.

In einigen Ausführungsformen wird die wellenseitige axiale Position eines Lagers durch Nuten in der Welle und Sicherungsringe auf beiden oder einer Seite des Lagers festgelegt. Dies ist insbesondere für das innere Lager der Fall.

Die Wärmeausdehnungskoeffizienten von Welle und Ständerblechpaket stimmen in der Regel nicht exakt überein. Über die axiale Länge der Welle und insbesondere über den Abstand zwischen den Lagern können Verschiebungen zwischen den wellenseitigen und ständerseitigen Lagersitzen auftreten. Diese werden insbesondere durch steigende Temperaturen während des Betriebs verursacht. Zum Ausgleich dieser Verschiebungen und der Fertigungstoleranzen wird bei einigen Ausführungsformen höchstens eines der Lager als Festlager ausgeführt. Die anderen Lager sind Loslager und weisen auf einer Seite einen Schiebesitz auf. Bei einer Fixierung eines Lagers auf der Welle erfolgt dies beispielsweise durch einen Preßsitz. Bei einer Fixierung des Lagers im Ständerblechpaket erfolgt dies beispielsweise durch einen Preßsitz oder durch Einkleben des Lagers. Hieraus ergeben sich insbesondere die folgenden Kombinationen: Schiebesitz im Ständerblechpaket am Lageraußendurchmesser und Preßsitz auf der Welle am Lagerinnendurchmesser oder Einkleben des Lagers in das Ständerblechpaket am Lageraußendurchmesser und Schiebesitz am Innendurchmesser auf der Welle oder Preßsitz im Ständerblechpaket am Lageraußendurchmesser und Schiebesitz auf der Welle am Lagerinnendurchmesser. Bei mehreren Loslagern können dabei alle dieselbe Variante oder verschiedene Varianten verwenden.

Eine bevorzugte Ausführungsform weist für beide Lager einen Schiebesitz am Lageraußenring, d.h. im Ständerblechpaket und einen Preßsitz am Lagerinnenring, d.h. auf der Welle auf.

Nun zurückkehrend zur Figur 1, zeigt diese einen Längsschnitt einer Ausführungsform eines Außenläufermotors gemäß der vorliegenden Erfindung. Der Motor weist einen Ständer 1 auf. Einteilig mit dem Ständer ist ein Flansch 2 ausgebildet, der zur Befestigung des Motors dient und den Motor an einer Stirnseite verschließt. Am Ständer 1 ist ein Ständerblechpaket 4 über dessen Stirnseite mittels Schrauben (50,51) verbunden. In einer zentralen Durchgangsöffnung 5 des Ständerblechpakets 4 ist eine Welle 6 gelagert. Ein Läufer 3 ist als Topf ausgebildet und die Welle 6 ist in eine Buchse 23 eingepreßt. Die Buchse 23 ist dabei formschlüssig mit dem Boden des Läufertopfes 3 verbunden. Die Welle 6 ist über ein inneres 10 und ein äußeres 11 Lager im Ständerblechpaket 4 gelagert. Das Ständerblechpaket 4 trägt auf seiner radial außenliegenden Seite eine Wicklung 7, auf seiner radial innenliegenden Seite befinden sich Lagersitze für die Lager 10,11. Beide Lager 10,11 sitzen direkt, d.h. ohne zwischengeschaltete Buchse im Ständerblechpaket 4. Das innere Lager 10 ist über zwei Nuten 30,31 in der Welle 6 und darin aufgenommene Sicherungsringe 32,33 gegen eine Axialverschiebung auf der Welle 6 fixiert. Der ständerseitige Lagersitz des inneren Lagers 10 weist eine Stufe 12 in der Durchgangsöffnung 5 des Ständerblechpakets 4 auf, die eine Verschiebung dieses Lagers 10 nach außen verhindert. Auch der Lagersitz des äußeren Lagers 11 weist ständerseitig eine Stufe 13 in der Durchgangsöffnung 5 des Ständerblechpakets 4 auf, die in diesem Fall eine Verschiebung des Lagers 11 nach innen verhindert. Wellenseitig ist das äußere Lager 11 durch eine Abstandsbuchse 20 gegen die Buchse 23 und damit den Boden des Läufertopfes 3 abgestützt. Am zylindrischen Teil des Läufertopfs 3 ist ein Läuferblechpaket 8 befestigt. Der zylindrische Teil des Läufertopfs 3 ist durch einen dünnen Luftspalt 17 vom Ständerblechpaket 4 getrennt.

Die beschriebenen Ausführungsformen stellen somit Außenläufermotoren bereit, die hinsichtlich ihres Aufbaus vorteilhaft sind und insbesondere mit geringerem Aufwand als im Stand der Technik genannte Lösungen herstellbar sind.

## Patentansprüche

1. Außenläufermotor umfassend:
einen Ständer (1), einen Läufer (3), ein Ständerblechpaket (4), das in axialer Richtung eine zentrale Aussparung (5) aufweist, eine in dieser Aussparung (5) angeordnete Welle (6), die mit dem Läufer (3) fest verbunden ist und zwei Lager (10, 11) zur Lagerung der Welle (6),
wobei das Ständerblechpaket (4) am Ständer (1) befestigt ist,
wobei beide Lager (10, 11) direkt im Ständerblechpaket (4) gelagert sind,
**dadurch gekennzeichnet, dass**
die axiale Position der Lager (10, 11) in wenigstens einer Richtung durch Stufen (12,13) im Ständerblechpaket (4) festgelegt sind.

2. Außenläufermotor nach Anspruch 1, wobei das Ständerblechpaket (4) stirnseitig am Ständer (1) befestigt ist.

3. Außenläufermotor nach einem der vorhergehenden Ansprüche, wobei die axiale Position wenigstens eines Lagers (10,11) wellenseitig in wenigstens einer Richtung durch Nut (30,31) und Sicherungsring (32,33) festgelegt ist.

4. Außenläufermotor nach einem der vorhergehenden Ansprüche, wobei wenigstens eines der Lager (10,11) ständerseitig einen Schiebesitz und wellenseitig einen Preßsitz aufweist.

5. Außenläufermotor nach einem der vorhergehenden Ansprüche, wobei wenigstens eines der Lager (10,11) ständerseitig eingeklebt ist und wellenseitig einen Schiebesitz aufweist.

6. Außenläufermotor nach einem der vorhergehenden Ansprüche, wobei wenigstens eines der Lager (10,11) ständerseitig einen Preßsitz und wellenseitig einen Schiebesitz aufweist.

## Claims

1. External rotor motor comprising:
a stator (1), a rotor (3), a stator lamination pack (4) which has in the axial direction a central cutout (5), a shaft (6) which is arranged in this cutout (5) and which is fixedly connected to the rotor (3), and two bearings (10, 11) for bearing the shaft (6) ,
wherein the stator lamination pack (4) is attached to the stator (1),
wherein the two bearings (10, 11) are mounted directly in the stator lamination pack (4),
**characterised in that**
the axial position of the bearings (10, 11) is fixed in at least one direction by steps (12, 13) in the stator lamination pack (4).

2. External rotor motor according to claim 1, wherein the stator lamination pack (4) is attached to the end side of the stator (1) .

3. External rotor motor according to one of the preceding claims, wherein the axial position of at least one bearing (10, 11) is fixed on the shaft side in at least one direction by a groove (30, 31) and a securing ring (32, 33) .

4. External rotor motor according to one of the preceding claims, wherein at least one of the bearings (10, 11) has a push fit on the stator side and a press fit on the shaft side.

5. External rotor motor according to one of the preceding claims, wherein at least one of the bearings (10, 11) is glued in on the stator side and has a push fit on the shaft side.

6. External rotor motor according to one of the preceding claims, wherein at least one of the bearings (10, 11) has a press fit on the stator side and a push fit on the shaft side.

## Revendications

1. Moteur à rotor extérieur comportant :
> un stator (1), un rotor (3), un ensemble de tôles de stator (4) qui, dans la direction axiale, comporte un évidement (5) central, un arbre (6) disposé dans ledit évidement (5) et : assemblé de manière solidaire au rotor (3), et deux paliers (10, 11) pour le montage de l'arbre (6),
> l'ensemble de tôles de stator (4) étant fixé sur le stator (1),
> les deux paliers (10, 11) étant montés directement sur l'ensemble de tôles de stator (4),
**caractérisé en ce que**
la position axiale des paliers (10, 11) est fixée dans au moins une direction par des gradins (12, 13) dans l'ensemble de tôles de stator (4).

2. Moteur à rotor extérieur selon la revendication 1, dans lequel l'ensemble de tôles de stator (4) est fixé du côté frontal au rotor (1).

3. Moteur à rotor extérieur selon l'une quelconque des revendications précédentes, dans lequel la position axiale d'au moins un palier (10, 11) est fixée par une rainure (30, 31) et un circlip (32, 33) du côté de l'arbre dans au moins une direction.

4. Moteur à rotor extérieur selon l'une quelconque des revendications précédentes, dans lequel au moins un des paliers (10, 11) comporte un ajustement appuyé du côté du stator et un ajustement pressé du côté de l'arbre.

5. Moteur à rotor extérieur selon l'une quelconque des revendications précédentes, dans lequel au moins un des paliers (10, 11) est collé du côté du stator et comporte un ajustement appuyé du côté de l'arbre.

6. Moteur à rotor extérieur selon l'une quelconque des revendications précédentes, dans lequel au moins un des paliers (10, 11) comporte un ajustement pressé du côté du stator et un ajustement appuyé du côté de l'arbre.
